# EUROPEAN PATENT SPECIFICATION

(11) **EP 4 178 006 B1**
(45) Date of publication and mention of the grant of the patent: **09.10.2024**
(21) Application number: 22757817.6
(22) Date of filing: 21.02.2022
(51) Int. Cl.: C22B 1/02, H01M 10/54, C22B 7/00, C22B 3/00, C22B 26/12, B09B 3/40, C22B 23/00, B09B 3/80, B09B 101/16

(54) **METHOD FOR TREATING BATTERY WASTE**
BEHANDLUNGSVERFAHREN FÜR BATTERIEABFALL
PROCÉDÉ DE TRAITEMENT DE DÉCHETS DE BATTERIE

(30) Priority: 30.03.2021 JP 2021058767; 05.10.2021 JP 2021164272
(43) Date of publication of application: 10.05.2023
(73) Proprietor: JX Metals Circular Solutions Co., Ltd., Tokyo 105-8417 (JP)
(72) Inventor: MIYANAGA, Hiroshi, Hitachi-shi, Ibaraki 317-0056 (JP); HAGA, Yasufumi, Hitachi-shi, Ibaraki 317-0056 (JP)
(74) Representative: Arnold & Siedsma
(86) International application number: PCT/JP2022/007001
(87) International publication number: WO 2022/209421

(56) References cited:
- EP-A1- 2 687 614
- WO-A1-2020/011765
- WO-A1-2021/201055
- JP-A- 2012 204 000
- JP-A- 2016 219 401
- JP-A- 2016 219 402
- JP-A- 2017 526 820
- JP-A- 2019 039 028
- JP-A- 2019 533 881
- JP-B1- 6 651 115
- LOMBARDO GABRIELE ET AL: "Comparison of the effects of incineration, vacuum pyrolysis and dynamic pyrolysis on the composition of NMC-lithium battery cathode-material production scraps and separation of the current collector", RESOURCES, CONSERVATION AND RECYCLING, ELSEVIER, AMSTERDAM, NL, vol. 164, 25 September 2020 (2020-09-25), XP086357457, ISSN: 0921-3449, [retrieved on 20200925], DOI: 10.1016/J.RESCONREC.2020.105142

## Description

### FIELD OF THE INVENTION

This specification discloses a technique relating to a treatment method for battery waste.

### BACKGROUND OF THE INVENTION

For example, vehicles such as hybrid vehicles, fuel cell vehicles, and electric vehicles are each equipped with a battery that supplies power to an electric motor as a drive source. In order to allow the battery to function effectively, a vehicle battery pack are typically used, as described in Patent Literatures 1 to 5. The vehicle battery pack is configured such that a battery, and an ECU for controlling the battery, a cooling device for cooling the battery and many electrical components such as various sensors for measuring the battery state are packaged as one package, and the package is housed in a casing.

For the battery of such an vehicle battery pack, a secondary battery capable of storing electricity by charging and of repeated use, especially a nickel hydrogen battery, has generally been used. In recent years, a lithium ion battery has been used which employs a lithium transition metal composite oxide for a cathode. In particular, the lithium ion battery contains valuable metals such as cobalt, and if the vehicle battery pack is disposed after use, it is desirable that the valuable metals contained in such waste is easily recovered for recycling at a relatively low cost, in terms of effective use of resources.

### CITATION LIST

### Patent Literatures

[Patent Literature 1] Japanese Patent No. 4917307 B
[Patent Literature 2] U.S. Patent Application Publication No. 2007/0141454 A1
[Patent Literature 3] Japanese Patent No. 4955995 B
[Patent Literature 4] Japanese Patent No. 5464357 B
[Patent Literature 5] Japanese Patent Application Publication No. 2006-179190 A JP2019039028A discloses a method for recovering valuables from waste lithium ion batteries comprising two heat treatment steps. JP6651115B discloses a recovery method of lithium from a lithium-ion battery. EP2687614A discloses a method for recovering valuable metals from lithium battery waste comprising a roasting step and an oxidation step.

### SUMMARY OF THE INVENTION

### Technical Problem

For example, when various metals are recovered from the vehicle battery pack waste or other battery waste, it is effective that the battery waste is subjected to a heat treatment by heating it in a heat treatment furnace, and then crushed and sieved to obtain components in the powder obtained from the battery waste (hereinafter referred to as "battery powder"), which are subjected to a wet process by leaching them into water.

Here, when the heat treatment of the battery waste is carried out in an atmosphere containing a certain amount of oxygen such as an air atmosphere, a flammable organic electrolytic solution existing inside the case in the battery waste explosively burns, leading to a difficulty to control the temperature of the heat treatment temperature. Accordingly, there is a concern that aluminum will be dissolved and recovery rates of valuable metals such as cobalt and nickel will be decreased. Therefore, it would be desirable to carry out the heat treatment in a nitrogen atmosphere or the like having a relatively low concentration of oxygen.

On the other hand, it has been found that when the battery powder subjected to the heat treatment in the nitrogen atmosphere is leached into an acid, a foaming phenomenon occurs in which a large amount of bubbles are generated from the acid leached solution, and this foaming phenomenon inhibits smooth implementation of the acid leaching step.

The specification discloses a method for treating battery waste, which can suppress the foaming phenomenon during acid leaching.

### Solution to Problem

The solution to the problem is as disclosed in the invention according to the claims.

### Advantageous Effects of Invention

According to the method for treating battery waste as described above, the foaming phenomenon during acid leaching can be suppressed

### BRIEF DESCRIPTION OF THE DRAWINGS

FIG. 1 is a flow chart showing an example of a method for recovering metals including a first heat treatment step and a second heat treatment step by a method for heat-treating battery waste according to an embodiment;
FIG. 2 is a graph showing a state during acid leaching in Test Example; and
FIG. 3 is a photograph showing a state during acid leaching in Comparative Example.

### DETAILED DESCRIPTION OF THE INVENTION

Hereinafter, embodiments of the method for treating battery waste as described above will be described in detail.

A method for treating battery waste disclosed in this specification includes: a first heat treatment step of heating the battery waste in an atmosphere comprising at least one selected from the group consisting of nitrogen, carbon dioxide and water vapor; and after the first heat treatment step, a second heat treatment step of changing the atmosphere in the first heat treatment step and heating the battery waste in an atmosphere which is different from the atmosphere in the first heat treatment step and which contains a larger amount of oxygen than that in the first heat treatment step.

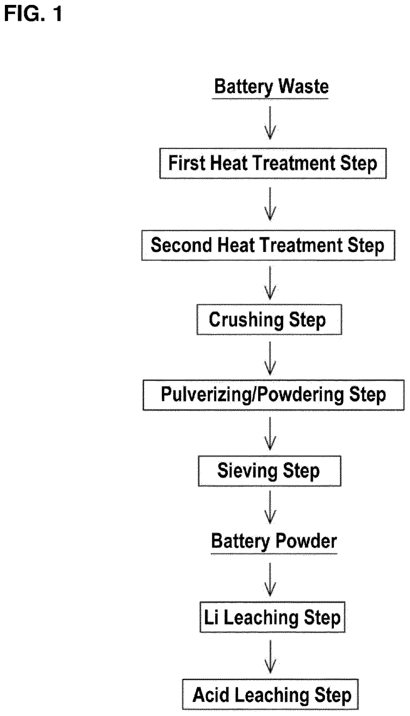

After the first heat treatment step and the second heat treatment step, as illustrated in FIG. 1, the battery waste after the heat treatment may optionally be subjected to a lithium leaching step of leaching lithium in battery powder by water, the battery powder being obtained by performing a crushing step, a pulverizing/powdering step and a sieving step, and an acid leaching step of leaching leached residues obtained in the lithium leaching step into an acid. By the steps, various metals contained in the battery waste can be recovered.

### (Battery Waste)

The battery waste can be vehicle battery waste or consumer electronics battery waste. For example, the battery waste may be the waste of vehicle battery packs mounted on vehicles such as hybrid vehicles, fuel cell vehicles and electric vehicles, and more particularly, the battery waste may be vehicle battery module waste or vehicle battery pack waste that has been discarded due to scrapped vehicles, replacement of batteries, manufacturing defects or other reasons, and the use of such vehicle battery pack waste or the like can achieve effective utilization of resources. However, the waste of batteries used in electronic devices or devices may be used.

The vehicle battery pack generally includes a metal case forming a housing around the case, and a battery having a plurality of battery cells and other components that are housed inside the case. The components inside the case include a control device such as an ECU for controlling the battery, a cooling device that circulates cooling air inside the case to suppress an increase in battery temperature during discharging or charging of the battery, various sensors for measuring the temperature and the like to observe the state of the battery and other required electrical components. The battery may be included in a vehicle battery pack as a vehicle battery module having a plurality of module cells combined in series or in parallel.

There are vehicle battery packs having various shapes, depending on the space constraints of the vehicles on which they are mounted. For example, there is a vehicle battery pack having a vertically long outer shape which is longer in one direction, such as a rectangular parallelepiped shape that is substantially rectangular in a plane view.

As the battery or the like housed inside the vehicle battery pack, for example, the battery waste may include a nickel-cadmium battery, a nickel-hydrogen battery, or a lithium ion battery, which can be repeatedly charged and used.

Of these, the lithium ion battery typically includes: a cathode in which a cathode active material composed of one or more single metal oxides of lithium, nickel, cobalt and manganese, or two or more composite metal oxides is applied and fixed onto an aluminum foil (a cathode substrate) via, for example, an organic binder such as polyvinylidene fluoride (PVDF); an anode made of a carbon-based material; and an organic electrolytic solution such as ethylene carbonate or diethyl carbonate or other electrolyte. In particular, it includes valuable metals such as cobalt as metals making-up the cathode, so that it is desirable to recover these valuable metals from the waste in terms of effective use of resources.

### (First Heat Treatment Step)

It is not easy to dismantle battery waste such as the vehicle battery pack waste as described above because it has a robust structure in which the circumference is protected by the case made of a metal or the like. If it is disassembled, there is a risk of electric shock due to residual voltage.

Therefore, in the first heat treatment step, the battery waste is subjected to a heat treatment while maintaining the structure in which the battery or the like is surrounded by the case, without disassembling the battery waste. This can reduce the time required for disassembling work. Further, even if the battery waste is not discharged, for example by immersing it in a predetermined liquid, there is no risk of electric shock in the heat treatment.

In the first heat treatment step, the battery waste is heated in an atmosphere containing at least one selected from the group consisting of nitrogen, carbon dioxide and water vapor. Among others, an atmosphere mainly containing nitrogen is preferable, because properties of the battery powder after the heat treatment can be made uniform when the treatment scale is increased.

If a relatively large number of oxygen is contained in the atmosphere in the first heat treatment step, the flammable organic electrolyte existing inside the case of the vehicle battery pack waste or the like may lead to explosive combustion, so that it may be difficult to control the temperature in the heat treatment furnace. In this case, aluminum such as aluminum foil is melted, and valuable metals such as cobalt and nickel are incorporated into the melted aluminum and solidified, so that it is concerned that they are removed together with the aluminum in a sieving step as described below. Therefore, it is desirable to maintain an oxygen partial pressure in the heat treatment furnace in the first heat treatment step at a certain low level.

Further, if the temperature can be controlled while the partial pressure of oxygen in the first heat treatment step is relatively low, it is possible to suppress the formation of powdery lithium aluminate due to the reaction of aluminum with lithium oxide. The formation of lithium aluminate, which is promoted at an elevated temperature and under a higher oxygen partial pressure, will lead to a decreased leaching rate of lithium in a lithium leaching step as described below, because lithium aluminate has a lower solubility in water than lithium carbonate. The aluminum foil that has not reacted with lithium aluminate can be easily separated in the sieving step. When lithium aluminate is produced, the aluminum foil becomes brittle and easily contaminated into the battery powder in the subsequent sieving step. Therefore, it is important to carry out the heat treatment under conditions that do not generate lithium aluminate as much as possible.

Further, the low partial pressure of oxygen during the heat treatment suppresses the production of nickel oxide and cobalt oxide, and promotes the production of cobalt and nickel, which are metals that are more soluble in acids, thus enabling a decrease in the recovery rate of valuable metals to be effectively suppressed.

The first heat treatment step may be carried out in a heating atmosphere in the heat treatment furnace, which is substantially free of oxygen. However, when the oxygen partial pressure is extremely low, the production of lithium carbonate by the heat treatment is not promoted. If lithium carbonate, which is easily leached into water, is not sufficiently produced, the leaching rate of lithium in the lithium leaching step decreases, and eventually the recovery rate of lithium decreases. It is presumed that the production of lithium carbonate by the heat treatment is carried out by the reaction of oxygen, carbon contained in the anode of the lithium ion battery and the like, and lithium. The oxygen can also be contained in the oxide of the cathode, but its amount is lower, and it cannot be said that it is sufficient to convert a large amount of lithium in the waste of the battery waste to lithium carbonate. On the other hand, the production of lithium carbonate is promoted by adjusting the oxygen partial pressure by containing a relatively small amount of oxygen in the atmospheric gas, according to the present invention.

In the first heat treatment step, an atmospheric gas containing oxygen and at least one selected from the group consisting of nitrogen, carbon dioxide and water vapor can be allowed to flow in the heat treatment furnace to adjust the oxygen partial pressure. More particularly, it is preferable to maintain the oxygen partial pressure during heating in a range of 5 × 10⁻⁴ atm to 4 × 10⁻² atm by allowing the atmospheric gas to flow in the heat treatment furnace. By maintaining the partial pressure of oxygen in such a range, it is possible to further promote the production of lithium carbonate while increasing the recovery rate of valuable metals as described above. In order to produce lithium carbonate, the partial pressure of oxygen during heating is at least higher than 0 atm. In the present invention the oxygen partial pressure is retained in a range of higher than 0 atm to 4x10⁻² atm.

When the partial pressure of oxygen during heating is 1 × 10⁻² atm or less, embrittlement of aluminum in the battery waste can be suppressed, and it is more preferably 5 × 10⁻³ atm or less. If aluminum is embrittled during the heat treatment, the separability of aluminum may be deteriorated during sieving which will be described below.

The oxygen partial pressure can be measured by a zirconia oxygen analyzer. The above-mentioned range of the oxygen partial pressure means that at least a measured value of the partial pressure measured at the time when the partial pressure can be measured may be in that range. For example, when the organic electrolytic solution volatilizes, the oxygen partial pressure or the like may not be measurable, but the oxygen partial pressure or the like at such a time when the measurement is impossible does not matter.

Further, from the viewpoint of improving the recovery rate of valuable metals and promoting the production of lithium carbonate, the concentration of oxygen in the inert gas when introduced into the heat treatment furnace is preferably 0.05% by volume to 4.00% by volume.

Further, the flow rate of the atmospheric gas in the heat treatment furnace is preferably 6 m³/hr to 60 m³/hr. If the flow rate of the inert gas is too high, the temperature distribution during the heat treatment becomes large, so that the heat treatment may not be possible at the optimum temperature. On the other hand, if the flow rate of the inert gas is too low, the oxygen partial pressure distribution during the heat treatment becomes large, so that the heat treatment may not be possible at the optimum oxygen partial pressure. From the point of view, the flow rate of the atmospheric gas is preferably 6 m³/hr to 60 m³/hr.

When heating the battery waste while adjusting the oxygen partial pressure and allowing the inert gas as described above to flow in the heat treatment furnace, the highest temperature of the battery waste is 400 °C to 650 °C. If the highest temperature of the battery waste is too low, there are concerns that the decomposition of the lithium oxide in the battery waste and the reduction of nickel oxide and cobalt oxide obtained after the decomposition will become insufficient, the production of lithium carbonate is not promoted as expected, and the removal of the organic electrolyte and the decomposition of polyvinylidene fluoride or polypropylene/polyethylene do not sufficiently take place. More preferably, the highest temperature is 500 °C or more. On the other hand, the highest temperature of the battery waste is preferably 600 °C or less.

For example, a temperature increasing rate until it reaches the highest temperature is preferably 50 °C/hr or more. If the temperature increasing is too slow, the heat treatment requires a longer period of time, so that the treatment does not proceed, and the equipment becomes large. On the other hand, if the temperature increasing is too fast, it is expected that gasification of the electrolytic solution and pyrolysis gases of PVDF and of PE and PP which are generally used as separators, will be generated at once, causing the cell to burst. However, if it is a general heat treatment furnace rather than a special furnace for the purpose of rapid heating, there is no problem as long as it is about 200 °C/hr or less, regardless of the upper limit.

The total of the time for retaining the highest temperature reached in the first heat treatment step and the time for retaining the highest temperature reached in a second heat treatment step which will be described later may preferably be 4 hours to 12 hours, even 4 hours to 9 hours. The retention time in the first heat treatment step can be determined depending on a ratio of the retention time in the second heat treatment step described below, but each retention time is preferably determined in view of an effect of suppressing the brittleness of aluminum by the first heat treatment step and an effect of suppressing the foaming by the second heat treatment step. For example, when the first heat treatment step is carried out for 3 hours and the second heat treatment step is carried out for 5 hours, the effect of suppressing the foaming can be enhanced, and when the first heat treatment step is carried out for 6 hours and the second heat treatment step is carried out for 2 hours, slight foaming occurs, but it can be controlled within the allowable operating range, and the brittleness of Al can be minimized, so that the Al purity in the battery powder can be lowered.

In the first heat treatment step as described above, examples of the heat treatment furnace that can be used herein include an atmospheric electric furnace or an atmospheric muffle furnace for a batch type, or a roller hearth kiln, a mesh belt kiln, a pusher kiln or the like for a continuous type. Among them, the roller hearth kiln and the pusher kiln are preferable because they are suitable for high-throughput processing.

If the battery waste is vehicle battery pack waste, it is preferable that the flammable organic electrolytic solution that has been evaporated and removed from the interior of the case of the vehicle battery pack waste is introduced into a secondary combustion furnace and burned there by a burner or the like to make it harmless. It is also possible to make the organic electrolytic solution harmless for vehicle battery module waste.

### (Second Heat Treatment Step)

In the second heat treatment step, the above-mentioned atmosphere in the heat treatment furnace in the first heat treatment step is changed, and the battery waste is heated in an atmosphere which is different from the atmosphere in the first heat treatment step and contains a larger amount of oxygen than the first heat treatment step. This is based on a new finding that when the battery waste is heated in an atmosphere such as nitrogen in the first heat treatment step and then heated in the atmosphere containing oxygen as the second heat treatment step, the foaming phenomenon in an acid leaching step can be suppressed.

The reason why the foaming phenomenon during the acid leaching is suppressed by heating the battery waste in the atmosphere containing nitrogen and then in the atmosphere containing oxygen is considered as follows. When the battery waste is heated in the atmosphere such as nitrogen, polymers (polyvinylidene fluoride and polypropylene) contained in the battery waste are pyrolytically decomposed. At this time, all of them are not necessarily gasified and removed by the pyrolysis, but a part that has not been completely decomposed may remain as a solid in the battery waste. Carbides generated by such incomplete pyrolysis and carbon particles of the anode active material (hereinafter referred to as "residual carbides and the like") may cause foaming when the battery waste is leached by an acid. On the other hand, when the battery waste is heated in the atmosphere containing nitrogen or the like and then heated in the atmosphere containing oxygen, it is believed that the residual carbides and the like are effectively removed by burning with contained oxygen. It is presumed that this can suppress the foaming phenomenon during the subsequent acid leaching, although not limited to such a mechanism.

In the battery waste heated in the second heat treatment step, the organic electrolytic solution is almost removed in the first heat treatment step before that. Therefore, even if the second heat treatment step is carried out in the atmosphere containing oxygen, it is unlikely that the temperature control becomes difficult due to the explosive combustion of the organic electrolytic solution. Further, by adjusting the heating time, temperature, and the like in the second heat treatment step, it is also possible to suppress the formation of lithium aluminate and/or oxides of nickel or cobalt.

The second heat treatment step is preferably carried out in an atmosphere containing 1.0% by volume or more of oxygen. The second heat treatment step is preferably carried out in an air atmosphere because it does not require the adjustment of the atmosphere to provide a simple process.

As in the first heat treatment step, the second heat treatment step may employ a batch type atmospheric electric furnace or atmospheric muffle furnace, or a continuous type roller hearth kiln or mesh belt kiln as the heat treatment furnace.

Although it is possible to use a heat treatment furnace different from that of the first heat treatment step in the second heat treatment step, the second heat treatment step is preferably carried out using the same heat treatment furnace as that of the first heat treatment step in terms of processing efficiency and workability. When the same heat treatment furnace as the first heat treatment step is used, in the second heat treatment step, the inside of the heat treatment furnace is changed from the atmosphere in the first heat treatment step to an atmosphere different from that atmosphere. When proceeding from the first heat treatment step to the second heat treatment, the heating temperature may be decreased and increased again, but the atmosphere in the heat treatment furnace may also be changed while maintaining the heating temperature.

In the second heat treatment step, the highest temperature of the battery waste is 400 °C to 650 °C. If the highest temperature of battery waste is too low, there is concern that some solids that have not been completely decomposed will not be removed. On the other hand, if the highest temperature of the battery waste is too high, the aluminum may be melted or oxidized and embrittled. The highest temperature reached in the second heat treatment step is 650 °C or less, because the electrolytic solution and the like are decomposed by the heating in the first heat treatment step and an increase in temperature due to explosive combustion does not easily occur. Further, the highest temperature reached in the second heat treatment step may be decreased, maintained, or increased as compared with the highest temperature reached in the first heat treatment step. When it is desired to suppress the embrittlement of aluminum, the highest temperature is preferably decreased, but it is more preferably maintained or increased, so that the effect of suppressing the foaming is enhanced. If the highest temperature is less than 400 °C, the effect of suppressing the foaming cannot be expected.

Most preferably, the highest temperature is 450 °C to 600 °C. This is a range in which the recovery rate of valuable metals and the effect of suppressing the foaming can be sufficiently expected by the decomposition of the binder, and the embrittlement of aluminum and the production of nickel and/or cobalt oxide can also be suppressed. Further, in this temperature range, it is suitable for operation to carry out the second treatment step at the same temperature as that of the first heat treatment step.

The second heat treatment step can be continuously carried out after the first heat treatment step. When the temperature of the first heat treatment step is 500 °C or more, when the temperatures of the first heat treatment step and the second heat treatment step are the same, or when the temperature of the second heat treatment step is lower than that of the first heat treatment step, the temperature increasing rate of the second heat treatment step does not need to be specified. For example, when the temperature of the first heat treatment step is lower such as 300 to 400 °C and the temperature of the second heat treatment step is higher than that, there is possibility that the generation of the resin decomposition gas has not been completed in the first heat treatment step. Therefore, it is necessary to pay attention to the temperature increasing rate, and specifically, it is preferably 50 °C/hr or more and 200 °C/hr or less.

After heating the battery waste in the first heat treatment step, the battery waste cooled may reach the above-mentioned highest temperature in the second heat treatment step. When the temperature of the first heat treatment step is 500 °C or less, organic substances such as the electrolytic solution and the binder are decomposed by the heating of the first heat treatment step, and it is unlikely that it is difficult to control the temperature due to explosive combustion. Therefore, in this case, it is not necessary to specify the temperature increasing rate in the second heat treatment step. However, when the temperature of the first heat treatment step is lower such as 300 to 400 °C, the temperature can be increased at a rate of 200 °C/hr or less as in the first heat treatment step to prevent any rapid generation of the resin decomposition gas. It is preferable that the highest temperature is retained for 2 to 6 hours. Subsequently, the battery waste is cooled by natural cooling, or forced cooling such as water cooling, a water cooling jacket or air cooling.

Further, the heating time of the second heat treatment step (the total heating time from the start to the end of heating in the defined atmosphere) is preferably 10% to 90%, more preferably 30% to 70%, of the total of the time for retaining the highest temperature in the first heat treatment step and the time for retaining the highest temperature in the second heat treatment step. If the heating time in the second heat treatment step is too short, there is a concern that residual carbides and the like remaining due to incomplete pyrolysis of the polymers in the first heat treatment step are not sufficiently removed in the second heat treatment step. On the other hand, if the heating time in the second heat treatment step is too long, a large amount of aluminum contained in the battery waste may be embrittled.

### (Crushing Step, Pulverizing/Powdering Step, Sieving Step)

After the second heat treatment step as described above, a crushing step, a pulverizing/powdering step, and a subsequent sieving step may optionally be carried out.

The crushing is carried out in order to take out the battery from the case of, for example, the vehicle battery module waste or the vehicle battery pack waste as the battery waste, destroy the housing of the battery, and selectively separate the cathode active material from the aluminum foil coated with the cathode active material. Here, various known devices or apparatuses can be used, and specific examples include an impact type crusher that can crush the cases or batteries by applying an impact while cutting the cases or the batteries, including, for example, a sample mill, a hammer mill, a pin mill, a wing mill, a tornado mill, a hammer crusher and the like. A screen can be installed at an outlet of the crusher, whereby the batteries are discharged from the crusher through the screen when they are crushed to a size enough to allow it to pass through the screen.

After crushing, the crushed batteries are lightly pulverized into powder and then sieved using a sieve having an appropriate opening. The pulverizing and powdering improve the separability of the cathode active material fixed to the aluminum foil from the aluminum foil. Thus, for example, aluminum, copper or the like remains on the sieve, and battery powder containing lithium, cobalt, nickel or the like from which aluminum, copper or the like has been removed to some extent can be obtained under the sieve.

### (Lithium Leaching Step)

The battery powder obtained through the above heat treatment step and, optionally, the crushing step, the pulverizing/powdering step and the sieving step, is brought into contact with either a weakly acidic solution, water or an alkaline solution in a lithium leaching step to dissolve the lithium contained in the battery powder in the solution. A preferred pH of water or the solution is 2 < pH < 13, and more preferably 3 < pH < 12.

Mainly in the first heat treatment step as described above, the lithium contained in the battery waste is sufficiently converted to lithium carbonate. Therefore, in the lithium leaching step, lithium carbonate in the battery powder can be easily leached into either the weakly acidic solution, water or the alkaline solution. On the other hand, other metals that may be contained in the battery powder are substantially insoluble in the weakly acidic solution and further insoluble in water or the alkaline solution. This can effectively separate the lithium contained in the battery powder from the other metals in the lithium leaching step.

There is no limitation of a type of acid used in the weakly acidic solution to be brought into contact with the battery powder, but it is typically a sulfuric acid solution. Also, there is no limitation of a type of alkali used in the alkaline solution to be brought into contact with the battery powder, but it is typically sodium hydroxide or calcium hydroxide. In the treatment of the battery waste containing lithium ion batteries, lithium hydroxide may be used. Further, the water brought into contact with the battery powder is specifically tap water, industrial water, distilled water, purified water, ion exchange water, pure water, ultrapure water, or the like.

The lithium-dissolved solution obtained after the lithium leaching step has a high pH due to the dissolution of lithium. Therefore, an acid such as sulfuric acid may be added to the above water or solution so that a pH of the lithium-dissolved solution is from 7 to 10. The acid may be added at any period before, during and/or after the dissolution of lithium. The pH of the lithium-dissolved solution finally obtained is preferably from 7 to 10. This is because if the pH of the lithium-dissolved solution is less than 7, metals such as Co may begin to dissolve, and if the pH is more than 10, aluminum may begin to dissolve.

A method for bringing the battery powder into contact with the water or solution includes various methods such as spraying, immersing, dipping, and the like. In terms of reaction efficiency, a method for immersing and stirring the battery powder in the water or solution is preferable.

A temperature of the solution during the contact of the battery powder with the water or solution can be from 10 °C to 60 °C. A pulp density can be from 50 g/L to 150 g/L. The pulp density means a ratio of dry weight (g) of the battery powder to an amount of the water or solution (L) that is brought into contact with the battery powder.

In the lithium dissolution step, a leaching rate of lithium in the water or solution is preferably from 30% to 70%, and more preferably from 45% to 55%.

The lithium concentration of the lithium-dissolved solution is preferably from 1.0 g/L to 3.0 g/L, and more preferably from 1.5 g/L to 2.5 g/L. The lithium-dissolved solution may contain from 0 mg/L to 1000 mg/L of sodium and from 0 mg/L to 500 mg/L of aluminum.

The lithium-dissolved solution obtained in the lithium leaching step can be subjected to treatments such as solvent extraction, neutralization, and carbonation, thereby recovering lithium in the lithium-dissolved solution as lithium carbonate. The resulting lithium carbonate may optionally be purified to lower the impurity grade.

### (Acid Leaching Step)

Residues that remain without being dissolved in the water or solution in the lithium leaching step as described above are removed by solid-liquid separation, and they can be then subjected to the acid leaching to leach them into the acid. The leached solution obtained by the acid leaching and solid-liquid separation can be subjected to, for example, neutralization, solvent extraction or other treatments to recover various metals such as cobalt and nickel contained therein.

In this embodiment, by carrying out the second heat treatment step as described above, the foaming phenomenon is suppressed when the residues of the lithium leaching step is leached into the acid. This can smoothly carry out the acid leaching step.

The acid leaching step can be carried out by a known method or under known conditions. For example, the pH is preferably 0.0 to 3.0. At the end of the acid leaching, the pH of the leached solution may be 0.5 to 2.0. The oxidation and reduction potential (ORP value, based on silver/silver chloride potential) may be, for example, -250 mV to 0 mV immediately after leaching by the acid, and about 300 mV for the leached solution after the solid-liquid separation.

### TEST EXAMPLES

Next, the method for treating the battery waste as described above was experimentally carried out and the effects thereof were confirmed, as described below. However, the descriptions herein are merely for illustrative and are not intended to be limited.

### (Test Example 1)

In Example, the first heat treatment step, the second heat treatment step, the crushing step, the pulverizing/powdering step, and the sieving step were carried out in this order to obtain battery powder. In the first heat treatment step, the battery powder was heated in a nitrogen atmosphere at the highest temperature of 600 °C, and the temperature was retained for 4 hours. Then, in the same heat treatment furnace, the atmosphere in the furnace was changed to the air atmosphere while retaining the highest temperature, the highest temperature was retained for 4 hours, and the second heat treatment step was carried out.

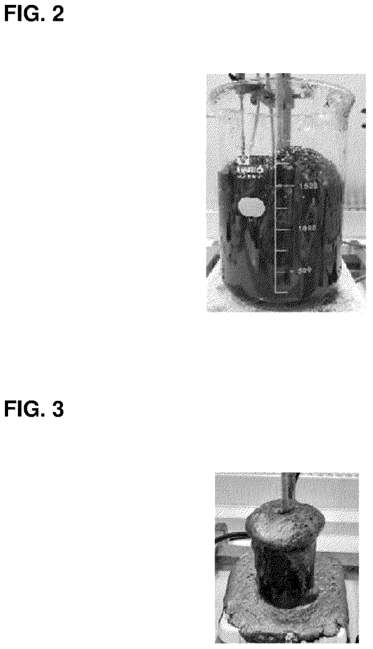

The battery powder obtained as described above was subjected to the lithium leaching step and the residues thereof were subjected to the acid leaching step. As shown in FIG. 2, the foaming did not occur so much in the acid leaching step, and the acid leaching could be carried out without any problem. In this case, a volume ratio (volume during foaming / initial volume of acid leaching) obtained by dividing the volume of the residues at time of foaming by the volume at the initial stage of acid leaching was 1.5.

Comparative Example was the same as Example with the exception that the heat treatment step of retaining the highest temperature for 8 hours in the nitrogen atmosphere was carried out instead of the first heat treatment step and the second heat treatment step of the Example as described above.

In the Comparative Example, in the acid leaching step, a large amount of foaming occurred as shown in FIG. 3, and it was difficult to continue the acid leaching. In this case, the volume ratio of the residues (volume during foaming / initial volume of acid leaching) was more than 2.0, and the residues overflowed from the container.

From the above results, it was found that foaming during acid leaching can be suppressed by carrying out the second heat treatment step.

### (Test Example 2)

When the battery waste was heat-treated in a nitrogen atmosphere at 580 °C to 600 °C for 8 hours, the carbon content in the resulting battery powder was about 40% by mass. On the other hand, when the battery waste was heat-treated in a nitrogen atmosphere at 580 °C to 600 °C for 4 hours (the first heat treatment step), and then heat-treated in an air atmosphere at 580 °C to 600 °C for 4 hours (the second heat treatment step), the carbon content in the battery powder thus obtained was about 15% by mass. The carbon content is a ratio of the total carbon contained in the battery powder obtained by the heat treatment, crushing and sieving. In the acid leaching step for each of these battery powders, the battery powder having a lower carbon content more suppressed the foaming. From the results, it is presumed that the residual carbides and the like affect the foaming during the acid leaching.

## Claims

1. A method for treating battery waste, comprising:
a first heat treatment step of heating the battery waste in an atmosphere comprising at least one selected from the group consisting of nitrogen, carbon dioxide and water vapor; and
after the first heat treatment step, a second heat treatment step of changing the atmosphere in the first heat treatment step and heating the battery waste in an atmosphere which is different from the atmosphere in the first heat treatment step and which comprises a larger amount of oxygen than that in the first heat treatment step;
wherein in the first heat treatment step oxygen is present, and an oxygen partial pressure of the atmosphere is retained in a range of higher than 0 atm to 4 × 10⁻² atm;
wherein in the first heat treatment step, the highest temperature of the battery waste during heating is 400 °C to 650 °C; and
wherein in the second heat treatment step, the highest temperature of the battery waste during heating is 400 °C to 650 °C.

2. The method for treating battery waste according to claim 1, wherein the first heat treatment step and the second heat treatment step are continuously carried out in the same heat treatment furnace.

3. The method for treating battery waste according to claim 1 or 2, wherein a heating time in the second heat treatment step is 10% to 90% of a total of a time for retaining a highest temperature in the first heat treatment step and a time for retaining a highest temperature in the second heat treatment step.

4. The method for treating battery waste according to any one of claims 1 to 3, wherein the second heat treatment step is carried out in an atmosphere containing 1.0% by volume or more of oxygen.

5. The method for treating battery waste according to any one of claims 1 to 4, wherein the atmosphere in the second heat treatment step is an air atmosphere.

6. The method for treating battery waste according to claim 1, wherein in the first heat treatment step, an oxygen partial pressure of the atmosphere is retained in a range of 5 × 10⁻⁴ atm to 4 × 10⁻² atm.

7. The method for treating battery waste according to any one of claims 1 to 6, wherein, when heating the battery waste in the first heat treatment step, an atmospheric gas comprising oxygen and at least one selected from the group consisting of nitrogen, carbon dioxide and water vapor is allowed to flow in the heat treatment furnace.

8. The method for treating battery waste according to any one of claims 1 to 7, wherein the battery waste is vehicle battery pack waste comprising a case forming an exterior and a vehicle battery module surrounded by the case, or vehicle battery module waste.

9. The method for treating battery waste according to any one of claims 1 to 8, wherein the battery waste comprises a lithium ion battery.

## Patentansprüche

1. Verfahren zum Behandeln von Batterieabfall, umfassend:
einen ersten Wärmebehandlungsschritt zum Erwärmen des Batterieabfalls in einer Atmosphäre, umfassend mindestens eines, das aus der Gruppe ausgewählt ist, bestehend aus Stickstoff, Kohlendioxid und Wasserdampf; und
nach dem ersten Wärmebehandlungsschritt einen zweiten Wärmebehandlungsschritt eines Änderns der Atmosphäre in dem ersten Wärmebehandlungsschritt und Erwärmen des Batterieabfalls in einer Atmosphäre, die sich von der Atmosphäre in dem ersten Wärmebehandlungsschritt unterscheidet und die eine größere Menge Sauerstoff als die in dem ersten Wärmebehandlungsschritt umfasst;
wobei in dem ersten Wärmebehandlungsschritt Sauerstoff vorhanden ist und ein Sauerstoffpartialdruck der Atmosphäre in einem Bereich von größer als 0 atm bis 4 × 10⁻² atm beibehalten wird;
wobei in dem ersten Wärmebehandlungsschritt die höchste Temperatur des Batterieabfalls während des Erwärmens 400 °C bis 650 °C beträgt; und
wobei in dem zweiten Wärmebehandlungsschritt die höchste Temperatur des Batterieabfalls während des Erwärmens 400 °C bis 650 °C beträgt.

2. Verfahren zum Behandeln von Batterieabfall nach Anspruch 1, wobei der erste Wärmebehandlungsschritt und der zweite Wärmebehandlungsschritt kontinuierlich in demselben Wärmebehandlungsofen durchgeführt werden.

3. Verfahren zum Behandeln von Batterieabfall nach Anspruch 1 oder 2, wobei eine Erwärmungszeit in dem zweiten Wärmebehandlungsschritt 10 % bis 90 % einer Summe einer Zeit zum Beibehalten einer höchsten Temperatur in dem ersten Wärmebehandlungsschritt und einer Zeit zum Beibehalten einer höchsten Temperatur in dem zweiten Wärmebehandlungsschritt beträgt.

4. Verfahren zum Behandeln von Batterieabfall nach einem der Ansprüche 1 bis 3, wobei der zweite Wärmebehandlungsschritt in einer Atmosphäre, die 1,0 Vol.-% oder mehr Sauerstoff enthält, durchgeführt wird.

5. Verfahren zum Behandeln von Batterieabfall nach einem der Ansprüche 1 bis 4, wobei die Atmosphäre in dem zweiten Wärmebehandlungsschritt eine Luftatmosphäre ist.

6. Verfahren zum Behandeln von Batterieabfall nach Anspruch 1, wobei in dem ersten Wärmebehandlungsschritt ein Sauerstoffpartialdruck der Atmosphäre in einem Bereich von 5 × 10 ⁴ atm bis 4 × 10⁻² atm beibehalten wird.

7. Verfahren zum Behandeln von Batterieabfall nach einem der Ansprüche 1 bis 6, wobei, wenn der Batterieabfall in dem ersten Wärmebehandlungsschritt erwärmt wird, es einem atmosphärischen Gas, umfassend Sauerstoff und mindestens eines, das aus der Gruppe ausgewählt wird, bestehend aus Stickstoff, Kohlendioxid und Wasserdampf, ermöglicht wird, in den Wärmebehandlungsofen zu strömen.

8. Verfahren zum Behandeln von Batterieabfall nach einem der Ansprüche 1 bis 7, wobei es sich bei dem Batterieabfall um Fahrzeugbatteriepackabfall, umfassend ein Gehäuse, das eine Außenseite ausbildet, und ein durch das Gehäuse umgebenes Fahrzeugbatteriemodul, oder um Fahrzeugbatteriemodulabfall, handelt.

9. Verfahren zum Behandeln von Batterieabfall nach einem der Ansprüche 1 bis 8, wobei der Batterieabfall eine Lithium-Ionen-Batterie umfasst.

## Revendications

1. Procédé permettant de traiter des déchets de batterie, comprenant :
une première étape de traitement thermique consistant à chauffer les déchets de batterie dans une atmosphère comprenant au moins l'un choisi dans le groupe constitué par azote, dioxyde de carbone et vapeur d'eau ; et
après la première étape de traitement thermique, une seconde étape de traitement thermique consistant à changer l'atmosphère dans la première étape de traitement thermique et à chauffer les déchets de batterie dans une atmosphère qui est différente de l'atmosphère dans la première étape de traitement thermique et qui comprend une quantité d'oxygène plus grande que dans la première étape de traitement thermique ;
dans lequel dans la première étape de traitement thermique de l'oxygène est présent, et la pression partielle en oxygène de l'atmosphère est maintenue dans une plage allant de plus de 0 atm à 4 × 10⁻² atm ;
dans lequel dans la première étape de traitement thermique, la température la plus élevée des déchets de batterie pendant le chauffage va de 400 °C à 650 °C ; et
dans lequel dans la seconde étape de traitement thermique, la température la plus élevée des déchets de batterie pendant le chauffage va de 400 °C à 650 °C.

2. Procédé permettant de traiter des déchets de batterie selon la revendication 1, dans lequel la première étape de traitement thermique et la seconde étape de traitement thermique sont effectuées en continu dans le même four de traitement thermique.

3. Procédé permettant de traiter des déchets de batterie selon la revendication 1 ou 2, dans lequel un temps de chauffage dans la seconde étape de traitement thermique vaut 10 % à 90 % d'un total d'un temps de maintien d'une température la plus élevée dans la première étape de traitement thermique et d'un temps de maintien d'une température la plus élevée dans la seconde étape de traitement thermique.

4. Procédé permettant de traiter des déchets de batterie selon l'une quelconque des revendications 1 à 3, dans lequel la seconde étape de traitement thermique est effectuée dans une atmosphère contenant 1,0 % en volume ou plus d'oxygène.

5. Procédé permettant de traiter des déchets de batterie selon l'une quelconque des revendications 1 à 4, dans lequel l'atmosphère dans la seconde étape de traitement thermique est une atmosphère d'air.

6. Procédé permettant de traiter des déchets de batterie selon la revendication 1, dans lequel dans la première étape de traitement thermique, une pression partielle en oxygène de l'atmosphère est maintenue dans une plage de 5 × 10⁻⁴ atm à 4 × 10⁻² atm.

7. Procédé permettant de traiter des déchets de batterie selon l'une quelconque des revendications 1 à 6, dans lequel, lors du chauffage des déchets de batterie dans la première étape de traitement thermique, un gaz atmosphérique comprenant de l'oxygène et au moins l'un choisi dans le groupe constitué par azote, dioxyde de carbone et vapeur d'eau est autorisé à s'écouler dans le four de traitement thermique.

8. Procédé permettant de traiter des déchets de batterie selon l'une quelconque des revendications 1 à 7, dans lequel les déchets de batterie sont des déchets de blocs batteries de véhicules comprenant un boîtier formant un extérieur et un module de batterie de véhicule entouré par le boîtier, ou des déchets de module de batterie de véhicule.

9. Procédé permettant de traiter des déchets de batterie selon l'une quelconque des revendications 1 à 8, dans lequel les déchets de batterie comprennent une batterie lithium-ion.
